# EUROPEAN PATENT SPECIFICATION

(11) **EP 3 932 497 B1**
(45) Date of publication and mention of the grant of the patent: **10.12.2025**
(21) Application number: 21182005.5
(22) Date of filing: 28.06.2021
(51) Int. Cl.: A62C 3/08, A62C 99/00

(54) **DISCHARGE OF LOW STABILITY FIRE SUPPRESSION AGENT IN AIRCRAFT CARGO BAY**
ABGABE VON FEUERUNTERDRÜCKUNGSMITTEL MIT GERINGER STABILITÄT IM FRACHTRAUM EINES FLUGZEUGS
DÉCHARGE D'AGENT D'EXTINCTION D'INCENDIE À FAIBLE STABILITÉ DANS UNE SOUTE D'AÉRONEF

(30) Priority: 29.06.2020 US 202016915066
(43) Date of publication of application: 05.01.2022
(73) Proprietor: Kidde Graviner Limited, Shirley, Solihull B90 4SS (GB)
(72) Inventor: CHATTAWAY, Adam, Berkshire, SL4 2QG (GB); BALDWIN, Eli, Knightdale, 27545 (US); SIMPSON, Terry, Wake Forest, 27587 (US)
(74) Representative: Dehns

(56) References cited:
- US-A- 4 726 426
- US-A1- 2012 186 835
- US-A1- 2020 094 089

## Description

### BACKGROUND

Exemplary embodiments pertain to the art of aircraft fire suppression and, in particular, to the discharge of a low stability fire suppression agent in an aircraft cargo bay.

Smoke detection and fire suppression are important functions in many environments. In an aircraft, for example, the functions are critical. This is because, unlike in other environments where escape is possible, quick suppression of a fire is vital to the integrity of the aircraft. and the safety of the passengers. Smoke detection systems monitor the cargo compartment. Once an overheat or fire condition is detected, suppression may be undertaken in two stages, an initial phase followed by a sustained phase. US 2020/094089 discloses an aircraft fire suppression system. US 2012/186835 relates to a hybrid cargo fire-suppression agent distribution system.

### BRIEF DESCRIPTION

The present invention provides an aircraft, as claimed in claim 1.

The first-stage agent or the second-stage agent may consist of CF₃I.

The first-stage agent or the second-stage agent may be a cooling agent including nitrogen, argon, or carbon dioxide.

The first-stage agent or the second-stage agent may be a blend of CF₃I and a cooling agent including nitrogen, argon, or carbon dioxide.

Optionally, the first-stage agent is a blend of CF₃I and a cooling agent including nitrogen, argon, or carbon dioxide and the second-stage agent is CF₃I.

The present invention also provides a method of performing fire suppression, as claimed in claim 5.

The first-stage agent or the second-stage agent may consist of CF₃I.

The first-stage agent or the second-stage agent may be a cooling agent including nitrogen, argon, or carbon dioxide.

the first-stage agent or the second-stage agent may be a blend of CF₃I and a cooling agent including nitrogen, argon, or carbon dioxide.

Optionally, the first-stage agent is a blend of CF₃I and a cooling agent including nitrogen, argon, or carbon dioxide and the second-stage agent is CF₃I.

The present invention also provides a method of configuring a fire suppression system in an aircraft, as claimed in claim 13.

### BRIEF DESCRIPTION OF THE DRAWINGS

The following descriptions should not be considered limiting in any way. With reference to the accompanying drawings, like elements are numbered alike:
FIG. 1 illustrates aspects of an aircraft that includes a low stability fire suppression agent for discharge in the cargo compartment according to one or more embodiments;
FIG. 2 is a cross-sectional view through A-A of the cargo compartment that includes a low stability fire suppression agent for discharge according to one or more embodiments;
FIGS. 3A and 3B show two perspective views of a fire suppression system according to one or more embodiments; and
FIG. 4 is a process flow of a method of performing fire suppression in a cargo compartment of an aircraft according to one or more embodiments.

### DETAILED DESCRIPTION

A detailed description of one or more embodiments of the disclosed apparatus and method are presented herein by way of exemplification and not limitation with reference to the Figures.

As previously noted, fire suppression is an important function in aircraft systems. In prior aircraft fire suppression systems, Halon 1301 is distributed into the cargo bay, for example, via a distribution system. Halon is an ozone-depleting substance whose production has ceased under the Montreal Protocol. Thus, environmentally friendly fire suppression agents are being developed as replacements for Halon.

Embodiments of the systems and methods detailed herein relate to the discharge of a low stability fire suppression agent in an aircraft cargo bay. Recently, trifluoroiodomethane or trifluoromethyl iodide (CF₃I) has been considered as an efficient and environmentally friendly fire suppression agent. However, the standard test protocol revealed an issue with the use of CF₃I. The test protocol involves the discharge of an extinguishing agent two minutes after a ceiling-mounted thermocouple has registered 93 degrees Celsius (°C) (200 degrees Fahrenheit (°F)). This scenario results in a large volume of hot gas near the ceiling with temperatures ranging from 315 °C (600 °F ) to in excess of 815 °C (1500 °F). But, CF₃I, which is a low stability fire suppression agent as compared with Halon, for example, starts to break down at temperatures over 315 °C (600 °F).

Computational fluid dynamics modeling and analysis of the temperature distribution pattern within the cargo compartment was undertaken. As a result, embodiments detailed herein relate to using CF₃I as a fire suppression agent that is discharged lower down in the cargo compartment as compared with typical ceiling-mounted distribution systems. Even at temperatures as high as 315 °C (600 °F), the calculated half-life of CF₃I is in excess of 10 hours. Further, CF₃I is injected with sufficient momentum to negate any effects of gravity. The systems and methods according to exemplary embodiments include using CF₃I in one or both phases of fire suppression and arranging the distribution system in the cheek of the cargo compartment to specifically address the stability of CF₃I.

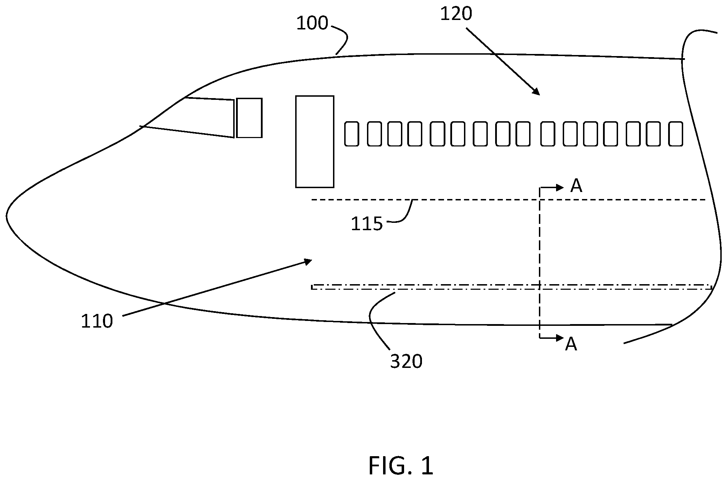

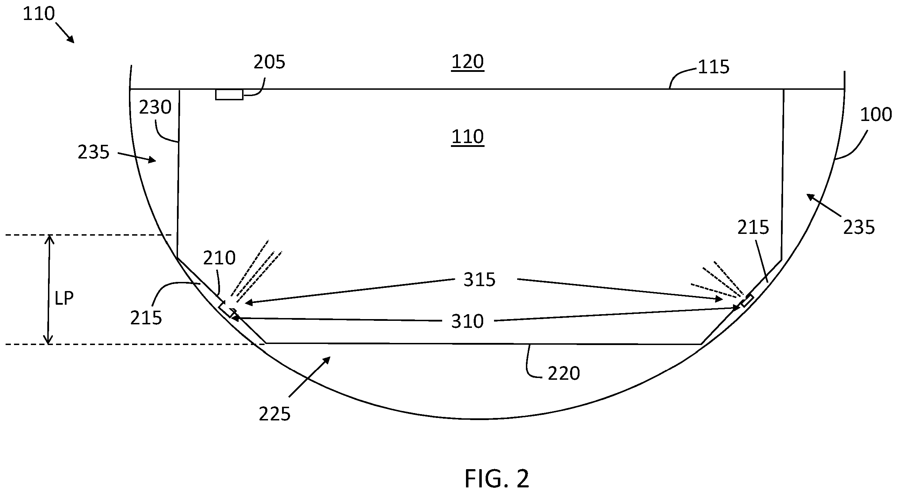

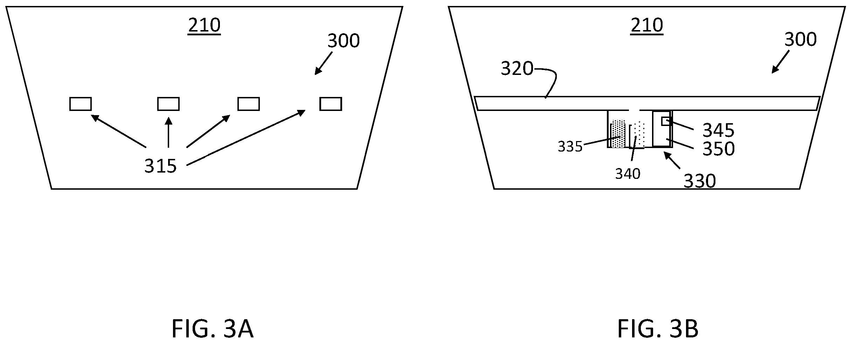

FIG. 1 illustrates aspects of an aircraft 100 that includes a low stability fire suppression agent for discharge in the cargo compartment 110 according to one or more embodiments. The exemplary aircraft 100 includes a cargo compartment 110 and a passenger compartment 120, separated by a divider 115 that is generally indicated by the dashed line in FIG. 1. While the exemplary passenger compartment 120 is shown as one level, the passenger compartment 120 may include multiple levels according to alternate embodiments. A distribution line 320 of the fire suppression system 300 (FIG. 2) in the cargo compartment 110 is indicated. The fire suppression system 300 is further detailed with reference to FIG. 3. Fire suppression components are also generally present in other parts of the aircraft 100 (e.g., passenger compartment 120, engines, cockpit) but are not indicated. A cross-section indicated as A-A is shown in FIG. 2.

FIG. 2 is a cross-sectional view through A-A of the cargo compartment 110 that includes a low stability fire suppression agent for discharge according to one or more embodiments. The passenger compartment 120 is indicated above the cargo compartment 110. The two compartments 110, 120 are separated by the divider 115 that defines a ceiling of the cargo compartment 110 and a floor of the passenger compartment 120. An exemplary fire detection system 205 is shown at the ceiling level. According to a prior approach, discharge of fire suppression materials in the cargo compartment 110 is also performed at the ceiling level, just below the divider 115. Even prior systems that include nozzles at different heights do not select the nozzle height based on the thermal analysis of the suppression materials. According to one or more embodiments, the placement of the outlets 310 is based on the thermodynamic modelling and analysis specific to CF₃I distribution during a fire.

In addition to the divider 115 that defines the ceiling of the cargo compartment 110, side walls 230, transitional walls 210, and a floor 220 define the remainder of the perimeter of the space. Behind each transitional wall 210 is in an area referred to as a cheek area 215. Each transitional wall 210 provides a transition between one of the side walls 230 and the floor 220, as shown. As also shown in FIG. 2, there are spaces 235 between each of the side walls 230 and the outer perimeter of the aircraft 100 and a space 225 between the floor 220 and the outer perimeter of the aircraft 100. Outlets 310 that are part of the fire suppression system 300 (FIG. 3) are shown to extend from the cheek area 215 behind each of the transitional walls 210 through openings in the transitional walls 210 such that an opening 315 of each outlet 310 is flush with the respective transitional wall 210.

According to alternate embodiments, the outlets 310 may be within or behind corresponding holes in the transitional wall 210. In any case, the outlets 310 are arranged such that discharge of fire suppressive agents into the cargo compartment 110 is via corresponding openings in the transitional wall 210. According to exemplary embodiments, components of the fire suppression system 300 do not extend into the cargo compartment 110. Intrusion of components of the fire suppression system 300 into the cargo compartment 110 may result in damage to the components from cargo or reduction in the area available for cargo. The components of the fire suppression system 300 are detailed with reference to FIGS. 3A and 3B.

According to further alternate embodiments, the outlets 310 may be located in the space 225 under the floor 220 and outlets are located in lower portions of the spaces 235 behind the side walls 230. That is, the outlets 310 may come through openings in the floor 220 and outlets do come through lower portions of the side walls 230 and may have openings 315 that are flush with the floor 220 or lower portions of the side walls 230 or that are aligned with holes in the floor 220 or lower portions of the side walls 230. In either case, the openings 315 may be arranged to discharge via holes in the floor 220 and are arranged to discharge via holes in lower portions of the side walls 230. Lower portion refers to the fact that the modeling and analysis indicates that the openings 315 must discharge in the lower portion, indicated as LP in FIG. 2, of the cargo compartment 110. This lower portion LP is the bottom 25 percent of the cargo compartment 110. Thus, the outlets 310 may be under the floor 220, in the cheek area 215 behind the transitional walls 210, and are in the spaces 235 behind the lower portions of the side walls 230.

FIGS. 3A and 3B show two perspective views of a fire suppression system 300 according to one or more embodiments. Continuing reference is made to FIGS. 1 and 2. FIG. 3A shows a view of the transitional wall 210 from the cargo compartment 110. As indicated, only the openings 315 of the outlets 310 are visible from within the cargo compartment. As discussed with reference to FIG. 3B, different materials flow from the openings 315 at different phases of fire suppression. The openings 315 are shown flush with the transitional wall 210 for explanatory purposes. However, as previously noted, the openings may be flush with the floor 220 or lower portions of the side walls 230 or may be aligned with holes in the transitional walls 210, floor 220, or side walls 230 in alternate embodiments.

FIG. 3B shows a view of the transitional wall 210 from the space 215 between the transitional wall 210 and the outer perimeter of the aircraft 100. The distribution line 320 and other components 330 are shown. The other components 330 include those that store and initiate discharge of first-stage and second-stage agents. These other components 330 are known and only generally described here. For example, storage container 335 may include the first-stage agent while storage container 340 includes the second-stage agent. A receiver 345 may receive a trigger from a fire detection system 205 to initiate discharge of the first-stage agent and second-stage agent. The receiver 345 may be part of a control unit 350 of the fire suppression system 300.

The first stage and second stage may be referred to, respectively, as high rate discharge (HRD) and low rate discharge (LRD) phases. The substance discharged during the first HRD phase (i.e., first-stage agent 235) and during the second LRD phase (i.e., the second-stage agent 240) may be CF₃I, a cooling agent (e.g., nitrogen, argon, or carbon dioxide), or a blend of CF₃I and the cooling agent. The first-stage agent and the second-stage agent may be different. Both are stored in a pressurized state in their respective storage containers 335, 340. A control unit 350 that is part of the other components 330 may control squib actuation of a blowdown valve of the storage containers such that the first-stage agent 235 and then the second-stage agent 240 are discharged until the are depleted. The delay between the first HRD phase and the second LRD phase may be on the order of seconds to minutes. In alternate embodiments, the first-stage agent 235 and the second-stage agent 240 may be discharged simultaneously.

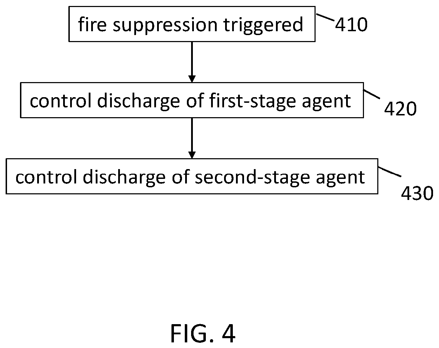

FIG. 4 is a process flow 400 of a method of performing fire suppression in a cargo compartment 110 of an aircraft 100 according to one or more embodiments. At block 410, the process flow begins when the fire suppression function is triggered. The trigger may be based on one or more fire detection systems 205. As previously noted, fire suppression may be performed in two different stages and may involve two different suppressive agents, a first-stage agent 235 and a second-stage agent 240. At block 420, controlling a discharge of a first-stage agent 235 may be performed until the first-stage agent is depleted. As previously noted, the first-stage agent 235 is pressurized and may be CF₃I, a cooling agent (e.g., nitrogen, argon, or carbon dioxide), or a blend of CF₃I and the cooling agent The discharge is may be via openings 315 of the outlets 310 that come through the transitional walls 210, the floor 220, and is via openings of the outlets that come through the lower portions of the side walls 230 such that the discharge is into the cargo compartment 110 at a height that is lower than about a quarter of the height of the cargo compartment 110.

At block 430, controlling a discharge of a second-stage agent 240 may be performed until the second-stage agent 240 is depleted. As previously noted, there may be a time delay between the processes at blocks 420 and 430 or the processes may be simultaneous. As previously noted, the second-stage agent 240 is pressurized and may be CF₃I, a cooling agent (e.g., nitrogen, argon, or carbon dioxide), or a blend of CF₃I and the cooling agent. The discharge is via the same openings 315 in the transitional walls 210 that are used to discharge the first-stage agent 235.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims appended hereto. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft (100) having a fire suppression system (300) comprising:
a pressurized first-stage agent (235);
a pressurized second-stage agent (240), wherein the first-stage agent or the second-stage agent includes trifluoromethyl iodide (CF₃I); and
a plurality of outlets (310) configured to discharge the first-stage agent during a first duration and the second-stage agent during a second duration; the aircraft **characterised in that**:
an opening (315) of each of the plurality of outlets is located in a lower quarter of a height of a cargo compartment (110) and wherein the opening is configured to:
discharge via corresponding openings in a portion of a side wall (230) of the cargo compartment (110) that is below a quarter of a height of the cargo compartment; or
discharge via corresponding openings in a transitional wall (210) of the cargo compartment (110), the transitional wall being a transition between a vertical surface (230) and a horizontal surface (220) defining the cargo compartment.

2. A method of performing fire suppression in an aircraft (100), the method comprising:
receiving (410) a trigger from a fire detection system (300); and
controlling (420) a discharge of a first-stage agent (235) and a discharge of a second-stage agent (240) via a plurality of outlets (310) that each have an opening (315) in a cargo compartment (110), wherein the first-stage agent or the second-stage agent includes trifluoromethyl iodide (CF₃I) stored under pressure; and the method **characterised in that**:
the opening of each of the plurality of outlets is located in a lower quarter of a height of the cargo compartment; and **in that** said controlling (420) the discharge comprises:
controlling a discharge of the first-stage agent (235) and a discharge of the second-stage agent (240) from openings (315) of the plurality of outlets (310) via corresponding openings in a portion of a side wall (230) of the cargo compartment (110) that is below a quarter of a height of the cargo compartment; or
controlling a discharge of the first-stage agent (235) and a discharge of the second-stage agent (240) from openings (315) of the plurality of outlets (310) via corresponding openings in a transitional wall (210) of the cargo compartment (110), the transitional wall being a transition between a vertical surface (230) and a horizontal surface (220) defining the cargo compartment.

3. The aircraft (100) having a fire suppression system (300) of claim 1, or the method according to claim 2, wherein the first-stage agent (235) or the second-stage agent (240) consists of CF₃I.

4. The aircraft (100) having a fire suppression system (300) of claim 1 or claim 3, or the method of claim 2 or claim 3, wherein the first-stage agent (235) or the second-stage agent (240) is a cooling agent including nitrogen, argon, or carbon dioxide.

5. The aircraft (100) having a fire suppression system (300) of claim 1 or claim 3, or the method according to claim 2 or claim 3, wherein the first-stage agent (235) or the second-stage agent (240) is a blend of CF₃I and a cooling agent including nitrogen, argon, or carbon dioxide.

6. The aircraft (100) having a fire suppression system (300) of claim 1, or the method according to claim 2, wherein the first-stage agent (235) is a blend of CF₃I and a cooling agent including nitrogen, argon, or carbon dioxide and the second-stage agent (240) is CF₃I.

7. A method of configuring a fire suppression system (300) in an aircraft (100), the method comprising:
disposing a distribution line (320) to supply a plurality of outlets (310) with a first-stage agent (235) and a second-stage agent (240) for dispersal; and
configuring each of the plurality of outlets with an opening (315) into a cargo compartment (110) of the aircraft, wherein the first-stage agent or the second-stage agent includes trifluoromethyl iodide (CF₃I) stored under pressure; the method **characterised in that**:
the opening of each of the plurality of outlets is located in a lower quarter of a height of the cargo compartment; and **in that** said configuring the plurality of outlets includes arranging the plurality of outlets such that:
discharge from corresponding openings (315) of the plurality of outlets is via corresponding openings in a portion of a side wall (230) of the cargo compartment (110) that is below a quarter of a height of the cargo compartment; or
discharge from corresponding openings (315) of the plurality of outlets is via corresponding openings in a transitional wall (210) of the cargo compartment (110), the transitional wall being a transition between a vertical surface (230) and a horizontal surface (220) defining the cargo compartment.

## Patentansprüche

1. Flugzeug (100) mit einem Feuerbekämpfungssystem (300), umfassend:
ein unter Druck stehendes Mittel der ersten Stufe (235);
ein unter Druck stehendes Mittel der zweiten Stufe (240), wobei das Mittel der ersten Stufe oder das Mittel der zweiten Stufe Trifluormethyljodid (CF₃I) einschließt; und
eine Vielzahl von Auslässen (310), die konfiguriert sind, um das Mittel der ersten Stufe während einer ersten Dauer und das Mittel der zweiten Stufe während einer zweiten Dauer abzulassen; das Flugzeug ist **dadurch gekennzeichnet, dass**:
eine Öffnung (315) jedes der Vielzahl von Auslässen in einem unteren Viertel einer Höhe eines Laderaums (110) angeordnet ist und wobei die Öffnung konfiguriert ist zum:
Ablassen über entsprechende Öffnungen in einem Abschnitt einer Seitenwand (230) des Laderaums (110), der unterhalb eines Viertels der Höhe des Laderaums liegt; oder
Ablassen über entsprechende Öffnungen in einer Übergangswand (210) des Laderaums (110), wobei die Übergangswand ein Übergang zwischen einer vertikalen Oberfläche (230) und einer horizontalen Oberfläche (220) ist, die den Laderaum definiert.

2. Verfahren zum Durchführen einer Feuerbekämpfung in einem Flugzeug (100), das Verfahren umfassend:
Empfangen (410) eines Auslösers von einem Feuererkennungssystem (300); und
Steuern (420) eines Ablassens eines Mittels der ersten Stufe (235) und eines Ablassens eines Mittels der zweiten Stufe (240) über eine Vielzahl von Auslässen (310), die jeweils eine Öffnung (315) in einem Laderaum (110) aufweisen, wobei das Mittel der ersten Stufe oder das Mittel der zweiten Stufe unter Druck gelagertes Trifluormethyliodid (CF₃I) aufweist; und das Verfahren ist **dadurch gekennzeichnet, dass**:
die Öffnung jedes der Vielzahl von Auslässen in einem unteren Viertel einer Höhe des Laderaums liegt; und dass das Steuern (420) des Ablassens Folgendes umfasst:
Steuern eines Ablassens des Mittels der ersten Stufe (235) und eines Ablassens des Mittels der zweiten Stufe (240) aus Öffnungen (315) der Vielzahl von Auslässen (310) über entsprechende Öffnungen in einem Abschnitt einer Seitenwand (230) des Laderaums (110), der sich unterhalb eines Viertels einer Höhe des Laderaums befindet; oder
Steuern eines Ablassens des Mittels der ersten Stufe (235) und eines Ablassens des Mittels der zweiten Stufe (240) aus Öffnungen (315) der Vielzahl von Auslässen (310) über entsprechende Öffnungen in einer Übergangsoberfläche (210) des Laderaums (110), wobei die Übergangsoberfläche ein Übergang zwischen einer vertikalen Oberfläche (230) und einer horizontalen Oberfläche (220) ist, die den Laderaum definieren.

3. Flugzeug (100), das ein Brandbekämpfungssystem (300) nach Anspruch 1 aufweist, oder das Verfahren nach Anspruch 2, wobei das Mittel der ersten Stufe (235) oder das Mittel der zweiten Stufe (240) aus CF₃I besteht.

4. Flugzeug (100), das ein Brandbekämpfungssystem (300) nach Anspruch 1 oder 3 oder das Verfahren nach Anspruch 2 oder 3 aufweist, wobei das Mittel der ersten Stufe (235) oder das Mittel der zweiten Stufe (240) ein Kühlmittel einschließlich Stickstoff, Argon oder Kohlendioxid ist.

5. Flugzeug (100), das ein Brandbekämpfungssystem (300) nach Anspruch 1 oder 3 oder das Verfahren nach Anspruch 2 oder 3 aufweist, wobei das Mittel der ersten Stufe (235) oder das Mittel der zweiten Stufe (240) eine Mischung aus CF₃I und einem Kühlmittel einschließlich Stickstoff, Argon oder Kohlendioxid ist.

6. Flugzeug (100), das ein Brandbekämpfungssystem (300) nach Anspruch 1 oder das Verfahren nach Anspruch 2 aufweist, wobei das Mittel der ersten Stufe (235) eine Mischung aus CF₃I und einem Kühlmittel einschließlich Stickstoff, Argon oder Kohlendioxid ist und das Mittel der zweiten Stufe (240) CF₃I ist.

7. Verfahren zum Konfigurieren eines Feuerbekämpfungssystems (300) in einem Flugzeug (100), das Verfahren umfassend:
Anordnen einer Verteilungsleitung (320) zur Versorgung einer Vielzahl von Auslässen (310) mit einem Mittel der ersten Stufe (235) und einem Mittel der zweiten Stufe (240) zur Verteilung; und
Konfigurieren jedes der Vielzahl von Auslässen mit einer Öffnung (315) in einen Laderaum (110) des Flugzeugs, wobei das Mittel der ersten Stufe oder das Mittel der zweiten Stufe unter Druck gelagertes Trifluormethyljodid (CF₃I) einschließt; das Verfahren ist **dadurch gekennzeichnet, dass**:
die Öffnung jedes der Vielzahl von Auslässen in einem unteren Viertel einer Höhe des Laderaums angeordnet ist; und dass das Konfigurieren der Vielzahl von Auslässen das Anordnen der Vielzahl von Auslässen derart einschließt, dass:
das Ablassen aus entsprechenden Öffnungen (315) der Vielzahl von Auslässen über entsprechende Öffnungen in einem Abschnitt einer Seitenwand (230) des Laderaums (110) erfolgt, der unterhalb eines Viertels einer Höhe des Laderaums liegt; oder
das Ablassen aus entsprechenden Öffnungen (315) der Vielzahl von Auslässen über entsprechende Öffnungen in einer Übergangswand (210) des Laderaums (110) erfolgt, wobei die Übergangswand ein Übergang zwischen einer vertikalen Oberfläche (230) und einer horizontalen Oberfläche (220) ist, die den Laderaum definiert.

## Revendications

1. Aéronef (100) présentant un système d'extinction d'incendie (300) comprenant :
un agent de premier étage (235) sous pression ;
un agent de second étage (240) sous pression, dans lequel l'agent de premier étage ou l'agent de second étage comporte de l'iodure de trifluorométhyle (CF₃I) ; et
une pluralité de sorties (310) configurées pour décharger l'agent de premier étage pendant une première durée et l'agent de second étage pendant une seconde durée ; l'aéronef étant **caractérisé en ce que** :
une ouverture (315) de chacune de la pluralité de sorties est située dans un quart inférieur d'une hauteur d'une soute (110) et dans lequel l'ouverture est configurée pour :
assurer une décharge par l'intermédiaire d'ouvertures correspondantes dans une partie d'une paroi latérale (230) de la soute (110) qui est inférieure à un quart d'une hauteur de la soute ; ou
assurer une décharge par l'intermédiaire d'ouvertures correspondantes dans une paroi de transition (210) de la soute (110), la paroi de transition étant une transition entre une surface verticale (230) et une surface horizontale (220) définissant la soute.

2. Procédé d'extinction d'incendie dans un aéronef (100), le procédé comprenant :
la réception (410) d'un déclencheur provenant d'un système de détection d'incendie (300) ; et
la commande (420) d'une décharge d'un agent de premier étage (235) et d'une décharge d'un agent de second étage (240) par l'intermédiaire d'une pluralité de sorties (310) présentant chacune une ouverture (315) dans une soute (110), dans lequel l'agent de premier étage ou l'agent de second étage comporte de l'iodure de trifluorométhyle (CF₃I) stocké sous pression ; et le procédé étant **caractérisé en ce que** :
l'ouverture de chacune de la pluralité de sorties est située dans un quart inférieur d'une hauteur de la soute ; et **en ce que** ladite commande (420) de la décharge comprend :
la commande d'une décharge de l'agent de premier étage (235) et d'une décharge de l'agent de second étage (240) à partir d'ouvertures (315) de la pluralité de sorties (310) par l'intermédiaire d'ouvertures correspondantes dans une partie d'une paroi latérale (230) de la soute (110) qui est inférieure à un quart d'une hauteur de la soute ; ou
la commande d'une décharge de l'agent de premier étage (235) et d'une décharge de l'agent de second étage (240) à partir d'ouvertures (315) de la pluralité de sorties (310) par l'intermédiaire d'ouvertures correspondantes dans une paroi de transition (210) de la soute (110), la paroi de transition étant une transition entre une surface verticale (230) et une surface horizontale (220) définissant la soute.

3. Aéronef (100) présentant un système d'extinction d'incendie (300) selon la revendication 1, ou procédé selon la revendication 2, dans lequel l'agent de premier étage (235) ou l'agent de second étage (240) est constitué de CF₃I.

4. Aéronef (100) présentant un système d'extinction d'incendie (300) selon la revendication 1 ou la revendication 3, ou procédé selon la revendication 2 ou la revendication 3, dans lequel l'agent de premier étage (235) ou l'agent de second étage (240) est un agent de refroidissement comportant de l'azote, de l'argon ou du dioxyde de carbone.

5. Aéronef (100) présentant un système d'extinction d'incendie (300) selon la revendication 1 ou la revendication 3, ou procédé selon la revendication 2 ou la revendication 3, dans lequel l'agent de premier étage (235) ou l'agent de second étage (240) est un mélange de CF₃I et un agent de refroidissement comportant de l'azote, de l'argon ou du dioxyde de carbone.

6. Aéronef (100) présentant un système d'extinction d'incendie (300) selon la revendication 1, ou procédé selon la revendication 2, dans lequel l'agent de premier étage (235) est un mélange de CF₃I et d'un agent de refroidissement comportant de l'azote, de l'argon ou du dioxyde de carbone et l'agent de second étage (240) est du CF₃I.

7. Procédé de configuration d'un système d'extinction d'incendie (300) dans un aéronef (100), le procédé comprenant :
la disposition d'une ligne de distribution (320) pour alimenter une pluralité de sorties (310) avec un agent de premier étage (235) et un agent de second étage (240) pour la dispersion ; et
la configuration de chacune de la pluralité de sorties avec une ouverture (315) dans une soute (110) de l'aéronef, dans lequel l'agent de premier étage ou l'agent de second étage comporte de l'iodure de trifluorométhyle (CF₃I) stocké sous pression ; le procédé étant **caractérisé en ce que** :
l'ouverture de chacune de la pluralité de sorties est située dans un quart inférieur d'une hauteur de la soute ; et **en ce que** ladite configuration de la pluralité de sorties comporte l'agencement de la pluralité de sorties de sorte que :
la décharge à partir d'ouvertures correspondantes (315) de la pluralité de sorties s'effectue par l'intermédiaire d'ouvertures correspondantes dans une partie d'une paroi latérale (230) de la soute (110) qui est inférieure à un quart d'une hauteur de la soute ; ou
la décharge à partir d'ouvertures correspondantes (315) de la pluralité de sorties s'effectue par l'intermédiaire d'ouvertures correspondantes dans une paroi de transition (210) de la soute (110), la paroi de transition étant une transition entre une surface verticale (230) et une surface horizontale (220) définissant la soute.
